(19)

Europäisches
Patentamt
European
Patent Office
Office européen
des brevets

(11) **EP 4 517 873 A1**

(12) **EUROPEAN PATENT APPLICATION**
published in accordance with Art. 153(4) EPC

(43) Date of publication:
**05.03.2025 Bulletin 2025/10**

(21) Application number: **23853085.1**

(22) Date of filing: **11.08.2023**

(51) International Patent Classification (IPC):
$H01M\ 4/36^{(2006.01)}$  $H01M\ 4/525^{(2010.01)}$
$H01M\ 4/505^{(2010.01)}$  $H01M\ 4/04^{(2006.01)}$
$H01M\ 4/62^{(2006.01)}$  $H01M\ 10/052^{(2010.01)}$
$H01M\ 4/38^{(2006.01)}$  $H01M\ 4/131^{(2010.01)}$
$H01M\ 4/1391^{(2010.01)}$  $H01M\ 4/02^{(2006.01)}$

(52) Cooperative Patent Classification (CPC):
**H01M 4/02; H01M 4/04; H01M 4/131;**
**H01M 4/1391; H01M 4/36; H01M 4/38;**
**H01M 4/505; H01M 4/525; H01M 4/62;**
**H01M 10/052;** Y02E 60/10

(86) International application number:
**PCT/KR2023/011962**

(87) International publication number:
**WO 2024/035219 (15.02.2024 Gazette 2024/07)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **12.08.2022  KR 20220101636**
**23.12.2022  KR 20220183744**

(71) Applicant: **LG Energy Solution, Ltd.**
**Seoul 07335 (KR)**

(72) Inventors:
• **KIM, Sa Rah**
**Daejeon 34122 (KR)**

• **JEON, Seo Young**
**Daejeon 34122 (KR)**
• **CHAE, Jong Hyun**
**Daejeon 34122 (KR)**
• **JOO, Mun Kyu**
**Daejeon 34122 (KR)**
• **KWON, Yo Han**
**Daejeon 34122 (KR)**
• **LEE, Il Ha**
**Daejeon 34122 (KR)**
• **KIM, Min Kyoung**
**Daejeon 34122 (KR)**

(74) Representative: **Hoffmann Eitle**
**Patent- und Rechtsanwälte PartmbB**
**Arabellastraße 30**
**81925 München (DE)**

(54) **CATHODE, MANUFACTURING METHOD THEREFOR, AND LITHIUM SECONDARY BATTERY COMPRISING CATHODE**

(57)    The present invention relates to a cathode, wherein the cathode comprises a cathode active material layer including a cathode active material, and the crack rate, of the surface part of the cathode active material layer, derived from the following mathematical formula 1 is 5.0-14.2%. [Mathematical formula 1] $CR = (CA) / [(PA) + (CA)]$ In the formula, CR is crack rate (%), CA is crack area, PA is particle area, and the surface part of the cathode active material layer means the area from the layer surface down to a depth of 20 $\mu$m.

[FIG.1]

**(Cont. next page)**

EP 4 517 873 A1

[FIG.1]

```
                          ┌─310┐
━━━━━━━━━━━━━━━━━━━━━━━━   │      } 300
                          └─320┘

        ⇩

                          ┌─120'
═══════════════════════   │─110                    ━━━━━━━━━━━━━━━━━━━━━━┐
                          └─120'                                         } 400
                                                   ━━━━━━━━━━━━━━━━━━━━━━┘
        ⇧                             ⇨

                          ┌─320┐
━━━━━━━━━━━━━━━━━━━━━━━━   │      } 300
                          └─310┘
```

[FIG.2]

```
                          ┌─310┐
━━━━━━━━━━━━━━━━━━━━━━━━   │─330  } 300
                          └─320┘

        ⇩

                          ┌─120'
═══════════════════════   │─110                    ━━━━━━━━━━━━━━━━━━━━━━┐
                          └─120'                                         } 400
                                                   ━━━━━━━━━━━━━━━━━━━━━━┘
        ⇧                             ⇨

                          ┌─320┐
━━━━━━━━━━━━━━━━━━━━━━━━   │─330  } 300
                          └─310┘
```

**Description**

**TECHNICAL FIELD**

Cross-reference to Related Applications

This application claims priority from Korean Patent Application Nos. 10-2022-0101636, filed on August 12, 2022, and 10-2022-0183744, filed on December 23, 2022, the disclosures of which are incorporated by reference herein.

Technical Field

The present disclosure relates to an overlitiated positive electrode, a method of preparing the positive electrode, and a lithium secondary battery including the positive electrode.

**BACKGROUND ART**

Requirements for the use of alternative energy or clean energy have increased due to the rapid increase in the use of fossil fuels, and, as a part of this trend, power generation and electricity storage using an electrochemical reaction are the most actively researched areas.

Currently, a typical example of an electrochemical device using the electrochemical energy may be a secondary battery and there is a trend that its usage area is expanding more and more. In recent years, demand for secondary batteries as an energy source has been significantly increased as technology development and demand with respect to portable devices, such as portable computers, mobile phones, and cameras, have increased, and, among these secondary batteries, lithium secondary batteries having high energy density, i.e., high capacity have been subjected to considerable research and have been commercialized and widely used.

In general, a secondary battery is composed of a positive electrode, a negative electrode, an electrolyte, and a separator. The negative electrode includes a negative electrode active material in which lithium ions released from the positive electrode are intercalated and deintercalated, and silicon-based active material particles having large discharge capacity may be used as the negative electrode active material. The silicon-based active material particle may correspond to silicon (Si) or $SiO_x$ (0<x<2). The silicon-based active material particle has an advantage of large theoretical capacity and low price. However, since the silicon-based active material particle has an excessively large volume change during battery operation, it is disadvantageous in that lifetime of the battery is rapidly decreased as the battery is cycled.

Thus, in order to minimize the volume change of the silicon-based active material particle, there is a method of using only a portion of total capacity of the silicon-based active material particles. For this purpose, a so-called pre-lithiation process is used in which lithium ions are intercalated into the negative electrode including the silicon-based active material particles in advance. Specifically, if the lithium ions are intercalated into the negative electrode by a method such as transferring lithium metal to the negative electrode, total capacity of the negative electrode may be reduced to a level of reversible capacity as the lithium ions react at irreversible sites of the negative electrode. Thus, since an amount of the lithium ions intercalated during battery operation may be suitably reduced to a level required for the battery operation, the volume change of the silicon-based active material particles may be minimized.

However, in the process of performing pre-lithiation by disposing the lithium metal on a surface of the negative electrode, excessive heat is generated due to an alloy reaction between lithium and silicon, and a possibility of ignition due to a reaction between the lithium and moisture also increases. Also, in a process of notching and punching the negative electrode, the possibility of ignition may be further increased due to an increased in reaction area between the lithium and the silicon-based active material, and there is a serious safety issue in that there also exists a possibility of ignition caused by pre-lithiated silicon-based active material particles.

Therefore, there is a need for a new technique which may suppress the possibility of excessive heat generation and ignition while improving the lifetime of the battery by intercalating lithium ions into the negative electrode in advance before battery operation.

**DISCLOSURE OF THE INVENTION**

**TECHNICAL PROBLEM**

An aspect of the present disclosure provides a positive electrode, in which an available region of a negative electrode may be controlled and safety in a battery preparation process may be improved by being overlithiated to have a crack ratio above a certain level in a surface portion of the positive electrode, and a method of preparing the same.

Another aspect of the present disclosure provides a secondary battery in which life characteristics are improved due to the control of the available region of the negative electrode and unique characteristics of a negative electrode active material may be achieved without disadvantages by including the positive electrode.

In order to solve the above-described tasks, according to an aspect of the present disclosure, there is provided a positive electrode which includes a positive electrode active material layer including a positive electrode active material, wherein a crack ratio of a surface portion of the positive electrode active material layer, which is derived from Equation 1, is in a range of 5.0% to 14.2%.

$$[Equation\ 1]$$

$$CR\ =\ (CA)/[(PA)\ +\ (CA)]$$

wherein, CR is a crack ratio (%), CA is a crack region, PA is a particle region, and the surface portion of the positive electrode active material layer refers to a region up to 20 $\mu$m in a depth direction from a layer surface.

In order to solve the above-described tasks, according to another aspect of the present disclosure, there is provided a method of preparing a positive electrode which includes: (P1) disposing a transfer stack, which includes a base film and a lithium metal layer disposed on the base film, on a preliminary positive electrode active material layer to form a positive electrode structure such that the lithium metal layer and the preliminary positive electrode active material layer are in contact with each other; (P2) rolling the positive electrode structure; and (P3) preparing a positive electrode by removing the base film from the transfer stack after the rolling, wherein the positive electrode includes a positive electrode active material layer including a positive electrode active material, and a crack ratio of a surface portion of the positive electrode active material layer, which is derived from Equation 1, is in a range of 5.0% to 14.2%.

In order to solve the above-described tasks, according to another aspect of the present disclosure, there is provided a secondary battery including a positive electrode, a negative electrode, and a separator between the positive electrode and the negative electrode, wherein the positive electrode includes a positive electrode active material layer including a positive electrode active material, and a crack ratio of a surface portion of the positive electrode active material layer, which is derived from Equation 1, is in a range of 5.0% to 14.2%.

## ADVANTAGEOUS EFFECTS

Since a positive electrode according to the present disclosure is overlithiated by a specific method of lithium metal transfer, it has a certain level of a crack ratio in a surface portion, and, accordingly, it may increase lifetime of a battery by reducing an available region of a negative electrode as lithium ions move to the negative electrode during an activation process and there is an advantage in that a process risk arising from pre-lithiation of the negative electrode may be reduced.

Also, a secondary battery according to the present disclosure may increase an available region of the negative electrode by including the positive electrode, and, accordingly, capacity may be increased. Particularly, in a case in which a silicon-based negative electrode active material is used, only a portion of the available region may be used without loss of lithium in the positive electrode due to overlithiated lithium, and, accordingly, there is an advantage in that life characteristics may be improved by minimizing a volume change.

## BRIEF DESCRIPTION OF THE DRAWINGS

FIG. 1 is a schematic view illustrating the step of P1 in the method of preparing a positive electrode according to an embodiment of the present disclosure.
FIG. 2 is a schematic view illustrating the step of P1 using a transfer stack including a polymer layer in the method of preparing a positive electrode according to an embodiment of the present disclosure.
FIG. 3 is a schematic view illustrating the step of P2 in the method of preparing a positive electrode according to an embodiment of the present disclosure.
FIG. 4 is a schematic view illustrating the step of P3 in the method of preparing a positive electrode according to an embodiment of the present disclosure.

## MODE FOR CARRYING OUT THE INVENTION

Hereinafter, the present disclosure will be described in more detail to allow for a clearer understanding of the present disclosure.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

The terminology used herein is for the purpose of describing particular example embodiments only and is not intended to be limiting of the present disclosure. In the specification, the terms of a singular form may include plural forms unless referred to the contrary.

It will be further understood that the terms "include," "comprise," or "have" when used in this specification, specify the presence of stated features, numbers, steps, elements, or combinations thereof, but do not preclude the presence or addition of one or more other features, numbers, steps, elements, or combinations thereof.

$D_{50}$ in the present specification may be defined as a particle diameter at a cumulative volume of 50% in a particle size distribution curve. The $D_{50}$, for example, may be measured by using a laser diffraction method. The laser diffraction method may generally measure a particle diameter ranging from a submicron level to a few mm and may obtain highly repeatable and high-resolution results.

**Positive Electrode**

A positive electrode according to the present disclosure includes a positive electrode active material layer including a positive electrode active material, wherein a crack ratio of a surface portion of the positive electrode active material layer, which is derived from Equation 1 below, is in a range of 5.0% to 14.2%.

$$[\text{Equation 1}]$$

$$CR = (CA)/[(PA) + (CA)]$$

wherein, CR is a crack ratio (%), CA is a crack region, PA is a particle region, and the surface portion of the positive electrode active material layer refers to a region up to 20 $\mu$m in a depth direction from a layer surface.

According to an embodiment of the present disclosure, the positive electrode includes a positive electrode active material layer. The positive electrode active material layer may itself constitute the positive electrode, but the positive active material layer may be disposed on a positive electrode collector, and the positive electrode active material layer may be disposed on one surface or both surfaces of the positive electrode collector.

According to an embodiment of the present disclosure, the positive electrode collector is not particularly limited as long as it has conductivity without causing adverse chemical changes in a battery, and, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 $\mu$m to 500 $\mu$m, and microscopic irregularities may be formed on the surface of the collector to improve adhesion of the positive electrode active material. The positive electrode collector, for example, may be used in various shapes such as that of a film, a sheet, a foil, a net, a porous body, a foam body, a non-woven fabric body, and the like.

According to an embodiment of the present disclosure, the positive electrode active material is a material in a form of a particle which may cause an electrochemical reaction, wherein it may be a lithium transition metal oxide. For example, the positive electrode active material may include at least one selected from the group consisting of a layered compound, such as a lithium cobalt oxide or a lithium nickel oxide, which is substituted with at least one transition metal; a lithium manganese oxide substituted with at least one transition metal; a lithium nickel cobalt manganese composite oxide represented by $Li_{1+x}[Ni_aCo_eMn_cM^1_{(1-a-b-c)}]O_{(2-e)}A_d$ (where, $M^1$ is at least one selected from the group consisting of aluminum (Al), magnesium (Mg), chromium (Cr), titanium (Ti), silicon (Si), and yttrium (Y), A is at least one selected from the group consisting of fluorine (F), phosphorus (P), and chlorine (Cl), and $-0.5 \leq x \leq 0.5$, $0.1 \leq a \leq 1$, $0.05 \leq b \leq 0.5$, $0.05 \leq c \leq 0.5$, $0 \leq d \leq 0.2$, and $0 < a+b+c \leq 1$) ; a lithium nickel-based oxide represented by $Li[Ni_{1-y}M^2_y]O_2$ (where, $M^2$ may be at least one selected from cobalt (Co), manganese (Mn), Al, copper (Cu), iron (Fe), Mg, boron (B), Cr, zinc (Zn), and gallium (Ga), and $0.01 \leq y \leq 0.7$); and an olivine-based lithium metal phosphate represented by $Li_{1+z}[M^3_{1-q}M^4_q]PO_{4-r}X_r$ (where, $M^3$ is at least one selected from the group consisting of Fe, Mn, Co, and nickel (Ni), $M^4$ is at least one selected from the group consisting of Al, Mg, and Ti, X is at least one selected from the group consisting of F, sulfur (S), and nitrogen (N), and $-0.5 \leq z \leq 0.5$, $0 \leq q \leq 0.5$, and $0 \leq r \leq 0.1$).

Specifically, the positive electrode active material may include a layer-structured lithium nickel-based transition metal composite oxide, and the lithium nickel-based transition metal composite oxide may include a compound of Formula 1 below and may more specifically be the compound of Formula 1 below.

[Formula 1]    $Li_{1+x}[Ni_aCo_bMn_cM^1_{(1-a-b-c)}]O_{(2-d)}A_d$

In Formula 1,

$M^1$ is at least one selected from the group consisting of Al, Mg, Cr, Ti, Si, and Y, and may specifically be Al.
A is at least one selected from the group consisting of F, P, And Cl, and may specifically be F.
x may satisfy $-0.5 \leq 0 \leq x \leq 0.5$, specifically, $-0.3 \leq x \leq 0.3$.
a may satisfy $0.6 \leq a < 1$, specifically, $0.7 \leq a \leq 0.9$.
b may satisfy $0.03 \leq b \leq 0.1$, specifically, $0.05 \leq b \leq 0.1$.
c may satisfy $0.03 \leq c \leq 0.1$, specifically, $0.05 \leq c \leq 0.1$.
d may satisfy $0 \leq d \leq 0.1$, specifically, $0 \leq d \leq 0.05$.
a, b, and c satisfy $0 < a+b+c \leq 1$, specifically, $a+b+c=1$.

The compound of Formula 1 may be in the form of a particle.

The compound of Formula 1 may be in a form of a secondary particle in which a plurality of primary particles are bonded to each other. Specifically, the compound of Formula 1 may be in the form of a secondary particle in which 10 or more primary particles are bonded to each other. Accordingly, there is an effect that lithium may be uniformly intercalated into and deintercalated from the positive electrode active material.

The compound of Formula 1 may have a $D_{50}$ of 5 $\mu$m to 15 $\mu$m, particularly 7 $\mu$m to 12 $\mu$m, and more particularly 9 $\mu$m to 10 $\mu$m. The $D_{50}$ may be a $D_{50}$ of the secondary particle. Since a positive electrode slurry is easily dispersed when the above range is satisfied, uniform coating of the positive electrode active material layer is possible.

The positive electrode active material may be included in an amount of 90 wt% to 99 wt%, particularly 92 wt% to 98 wt%, and more particularly 95 wt% to 98 wt% in the positive electrode active material layer.

According to an embodiment of the present disclosure, the positive electrode active material layer may further include a positive electrode binder. The positive electrode binder improves adhesion between the positive electrode active material particles and adhesion between the positive electrode active material and the positive electrode collector. Specific examples of the binder may be polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated-EPDM, a styrene-butadiene rubber (SBR), a fluorine rubber, or various copolymers thereof, and any one thereof or a mixture of two or more thereof may be used.

The positive electrode binder may be included in an amount of 0.5 wt% to 5.0 wt%, particularly 1.0 wt% to 2.5 wt%, and more particularly 1.0 wt% to 2.0 wt% in the positive electrode active material layer.

According to an embodiment of the present disclosure, the positive electrode active material layer may further include a positive electrode conductive agent. The positive electrode conductive agent is used to provide conductivity to the electrode, wherein any conductive agent may be used without particular limitation as long as it has suitable electron conductivity without causing adverse chemical changes in the battery. Specific examples of the positive electrode conductive agent may be graphite such as natural graphite or artificial graphite; carbon based materials such as carbon black, acetylene black, Ketjen black, channel black, furnace black, lamp black, thermal black, and carbon fibers; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used.

The positive electrode conductive agent may be included in an amount of 0.5 wt% to 30.0 wt%, particularly 0.5 wt% to 10.0 wt%, and more particularly 1.0 wt% to 4.0 wt% in the positive electrode active material layer.

According to an embodiment of the present disclosure, the positive electrode is characterized in that a crack ratio of a surface portion of the positive electrode active material layer, which is derived from Equation 1 below, is in a range of 5.0% to 14.2%.

[Equation 1]

$$CR = (CA)/[(PA) + (CA)]$$

wherein, CR is a crack ratio (%), CA is a crack region, PA is a particle region, and the surface portion of the positive electrode active material layer refers to a region up to 20 $\mu$m in a depth direction from a layer surface.

With respect to the crack ratio, a cross section of the positive electrode is analyzed to set a region of 20 $\mu$m in the depth direction and 200 $\mu$m in an in-plane direction from the surface of the active material layer as a reference region, and a crack region and a particle region within this region are divided to obtain areas. The crack region is a portion where the particles are broken, and the particle region is a region where the particles are not broken, wherein the electrode is cut by ion milling, and a cut cross section is photographed with a scanning electron microscope (SEM). For the SEM cross-sectional image, the crack region and the particle region were quantified based on digital transformation, wherein a ratio of a region where a specific surface area was increased in the positive electrode was calculated by an additional process and quantified. Also, in order to improve accuracy, 50 or more reference regions were designated for the positive electrode cross section to obtain a crack ratio of each region, and an average value thereof was obtained.

According to an embodiment of the present disclosure, the crack ratio may be in a range of 5.0% to 14.2%, may preferably be 6.0% or more, 7.0% or more, 8.0% or more, or 9.0% or more, and may be 14.1% or less, or 14.0% or less. A crack ratio of less than 5.0% means that lithium ions in the positive electrode active material layer are not sufficiently overlithiated, wherein, since there is not a sufficient amount of lithium that may move to the negative electrode through activation, it may be difficult to increase the available region of the negative electrode, and, as a result, a problem which may degrade life characteristics, such as a volume expansion of the negative electrode, may occur.

That is, in a process of preparing the positive electrode of the present disclosure, a lithium metal layer is transferred onto the positive electrode active material layer, and thereafter, the positive electrode including the lithium metal layer is rolled so that lithium ions of the lithium metal layer are intercalated into the positive electrode active material layer. In this process, lithium by-products are generated by the lithium ions. Accordingly, that the crack ratio is 5.0% or more may be considered to mean that the lithium metal layer was transferred to the positive electrode active material layer and the positive electrode was rolled during the preparation of the positive electrode of the present disclosure.

If the crack ratio is greater than 14.2%, capacity of the positive electrode active material is decreased, and a side reaction due to broken particles may increase battery resistance or gas generation to cause performance degradation. Thus, in a case in which overlithiation is performed to control the available region of the negative electrode, it is necessary to allow the crack ratio to satisfy a specific range through appropriate control.

According to an embodiment of the present disclosure, the positive electrode may further include a lithium metal layer which is disposed on the positive electrode active material layer. The lithium metal layer plays a role in supplying lithium ions to the positive electrode active material layer. Specifically, the positive electrode active material layer may be disposed between the positive electrode collector and the lithium metal layer. The lithium metal layer may be in contact with the positive electrode active material layer. The lithium metal layer includes solid-phase lithium metal, and the lithium metal layer may specifically be formed of solid-phase lithium metal. The lithium metal layer may undergo solid-phase diffusion of lithium metal into the positive electrode active material layer through transfer and rolling, and, accordingly, after the activation, the lithium metal layer may not exist or may exist in a state in which its thickness is extremely thin.

According to an embodiment of the present disclosure, the positive electrode may further include a polymer layer which is disposed on the positive electrode active material layer. The polymer layer may play a role in effectively peeling off the lithium metal layer from the transfer stack and allowing the lithium metal layer to be easily transferred to the positive electrode active material layer during the preparation of the positive electrode. That is, the polymer layer may be separated from the transfer stack together with the lithium metal layer to be disposed on the positive electrode active material layer. The polymer layer may exist in contact with the positive electrode active material layer, and alternatively, the lithium metal layer may exist between the polymer layer and the positive electrode active material layer.

The polymer layer may be at least one selected from the group consisting of polyethylene terephthalate (PET), polyimide (PI), poly (methylmethacrylate) (PMMA), polypropylene, polyethylene, and polycarbonate. Accordingly, in a secondary battery including the positive electrode, since the polymer layer may be dissolved in an electrolyte solution contained in the secondary battery, an increase in resistance of the battery may be prevented. Particularly, the polymer layer may include PMMA, and, in this case, the above-described effect may be further improved.

According to an embodiment of the present disclosure, in the positive electrode, the positive electrode active material layer may have a porosity of 10% to 40%, particularly 15% to 35%, and more particularly 25% to 30%. In this case, no additional thickness change may occur during rolling.

In the positive electrode according to the embodiment of the present disclosure, the lithium metal layer is disposed on the positive electrode through a transfer method, and lithium of the lithium metal layer is intercalated into the positive electrode active material layer by solid-phase diffusion by rolling. The lithium may move to the negative electrode during battery operation to play a role in reducing the available region of the negative electrode.

Thus, since an available range of negative electrode capacity may be reduced without loss of lithium in the positive electrode active material due to the lithium overlithiated in the positive electrode, an excessive volume change of a silicon-based active material may particularly be suppressed and life characteristics of the battery may be improved. Also, since the capacity of the positive electrode active material may be used in an entire range, there is an advantage in that battery efficiency is increased and energy density may also be maximized.

The positive electrode according to the embodiment of the present disclosure is characterized in that pre-lithiation is not performed by typically contacting the lithium metal layer to the negative electrode, but the lithium metal layer is transferred to the positive electrode and rolled and the lithium ions intercalated into the positive electrode are then transferred to the negative electrode in an activation process of the battery.

That is, since the negative electrode and the lithium metal layer are not in contact and the lithium ions are not directly intercalated into the negative electrode from the lithium metal layer, a phenomenon of excessive heat generation due to an alloy reaction of lithium and silicon at the negative electrode may be avoided and a possibility of ignition due to a reaction between the lithium and moisture may be significantly reduced. Furthermore, since the lithium ions are not intercalated into the negative electrode during notching and punching the negative electrode (because the pre-lithiation has not progressed), a possibility of ignition during the notching and punching process may be significantly reduced.

**Method of Preparing Positive Electrode**

A method of preparing a positive electrode according to the present disclosure includes (P1) disposing a transfer stack, which includes a base film and a lithium metal layer disposed on the base film, on a preliminary positive electrode active material layer to form a positive electrode structure such that the lithium metal layer and the preliminary positive electrode active material layer are in contact with each other; (P2) rolling the positive electrode structure; and (P3) preparing a positive electrode by removing the base film from the transfer stack after the rolling, wherein the positive electrode includes a positive electrode active material layer including a positive electrode active material, and a crack ratio of a surface portion of the positive electrode active material layer, which is derived from Equation 1 below, is in a range of 5.0% to 14.2%.

$$[\text{Equation 1}]$$

$$CR = (CA)/[(PA) + (CA)]$$

wherein, CR is a crack ratio (%), CA is a crack region, PA is a particle region, and the surface portion of the positive electrode active material layer refers to a region up to 20 $\mu$m in a depth direction from a layer surface.

According to an embodiment of the present disclosure, the step of P1 of the method of preparing a positive electrode is disposing a transfer stack, which includes a base film and a lithium metal layer, on a preliminary positive electrode active material layer to form a positive electrode structure such that the lithium metal layer and the preliminary positive electrode active material layer are in contact with each other.

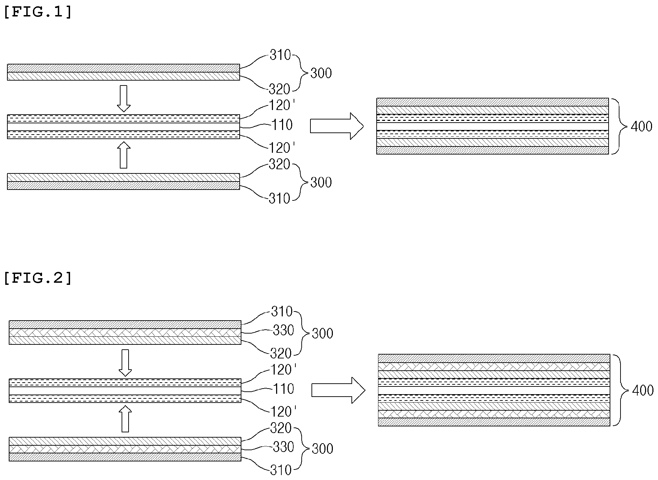

Referring to FIG. 1, a transfer stack 300 may include a base film 310 and a lithium metal layer 320 disposed on the base film 310. The base film 310 may be used without limitation as long as it is a material which may withstand high-temperature conditions that occur in a process of depositing the lithium metal layer 320 on the base film 310. Specifically, the base film may include at least one selected from the group consisting of polyethylene terephthalate (PET), polyimide (PI), poly (methylmethacrylate) (PMMA), polypropylene, polyethylene, and polycarbonate.

According to an embodiment of the present disclosure, the lithium metal layer may be disposed on the base film. The lithium metal layer plays a role in supplying lithium ions to the preliminary positive electrode active material layer. The lithium metal layer includes solid-phase lithium metal, and the lithium metal layer may specifically be formed of solid-phase lithium metal.

According to an embodiment of the present disclosure, in the transfer stack, the lithium metal layer may have a thickness of 1.0 $\mu$m to 10.0 $\mu$m, may specifically have a thickness of 2.0 $\mu$m or more, 2.5 $\mu$m or more, or 3.0 $\mu$m or more, and may also have a thickness of 9.5 $\mu$m or less, 9.0 $\mu$m or less, 8.5 $\mu$m or less, 8.0 $\mu$m or less, 7.5 $\mu$m or less, 7.0 $\mu$m or less, or 6.5 $\mu$m or less. In a case in which the above range is satisfied, since a degree of cracking of the positive electrode active material particles on a surface of the positive electrode may be reduced to a point where it does not affect performance and application of usable lithium, that is, an amount of lithium loss may be controlled to be low, a decrease in initial capacity of the battery may be suppressed and lifetime may be improved due to compensation of irreversible capacity of the negative electrode.

According to an embodiment of the present disclosure, a loading amount (unit: mAh/cm$^2$) of the lithium metal layer may be 4% to 40% of a loading amount (unit: mAh/cm$^2$) of the preliminary positive electrode active material layer, and may specifically be 12% to 35%, more specifically, 20% to 30%. When the above range is satisfied, since the generation of the by-product is small and lithium may be easily intercalated into the positive electrode active material, target lithium intercalation capacity may be easily achieved.

In the step of P1, referring to FIG. 1, a preliminary positive electrode active material layer 120' is disposed on a positive electrode collector 110, and the transfer stack 300 may be disposed on the preliminary positive electrode active material layer 120' to form a positive electrode structure 400 such that the lithium metal layer 320 and the preliminary positive electrode active material layer are in contact with each other.

Herein, since the positive electrode collector 110 has been described above in the description of the positive electrode, a description thereof will be omitted.

Referring to FIG. 2, the transfer stack 300 may further include a polymer layer 330. The polymer layer 330 may be disposed between the base film 310 and the lithium metal layer 320. The polymer layer may play a role in effectively peeling off the lithium metal layer from the transfer stack and allowing the lithium metal layer to be easily transferred to the positive electrode active material layer during the preparation of the positive electrode. That is, the polymer layer may be separated from the transfer stack together with the lithium metal layer to be disposed on the positive electrode active material layer.

The polymer layer may exist in contact with the positive electrode active material layer, and alternatively, the lithium metal layer may exist between the polymer layer and the positive electrode active material layer.

Herein, since the polymer layer has been described above in the description of the positive electrode, a description thereof will be omitted.

The polymer layer may have a thickness of 0.1 $\mu$m to 10 $\mu$m, particularly 0.5 $\mu$m to 5 $\mu$m, and more particularly 1 $\mu$m to 2.5 $\mu$m. In a case in which the above range is satisfied, the lithium metal layer may be easily transferred to the positive electrode active material layer, and a reverse transfer phenomenon, in which the positive active material layer is transferred to the transfer stack, may be prevented.

According to an embodiment of the present disclosure, the step of P2 of the method of preparing a positive electrode is rolling the positive electrode structure.

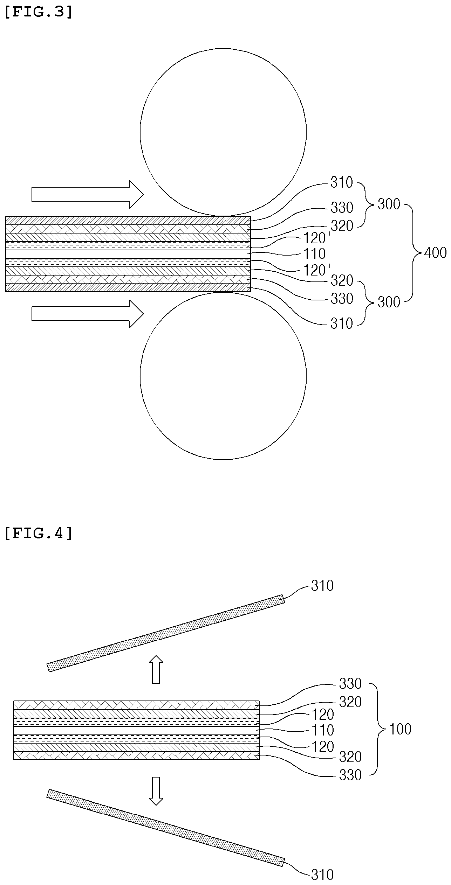

Referring to FIG. 3, in the step of P2, the prepared positive electrode structure 400 may be rolled. The rolling may be performed by a roll press method. Specifically, through two rolls R spaced apart from each other with a predetermined space in a vertical direction, a pressure may be applied in the vertical direction to the positive electrode structure 400 passing through the space, and the pressure may be a linear pressure. Through the rolling process, at least a portion of the lithium ions of the lithium metal layer included in the transfer stack may be intercalated into the preliminary positive electrode active material layer. In this process, the preliminary positive electrode active material layer may become a positive electrode active material layer. In FIGS. 3 and 4, it was illustrated that the lithium metal layer is included in the positive electrode, but, in a case in which the entire lithium metal layer is intercalated into the preliminary positive electrode active material layer during the rolling process, the lithium metal layer may not exist as a separate layer.

The pressure applied to the positive electrode structure during the rolling may be in a range of 10 kgf/cm to 90 kgf/cm, particularly 15 kgf/cm to 80 kgf/cm, and more particularly 20 kgf/cm to 40 kgf/cm.

In a case in which the rolling pressure is applied within the above range, the lithium metal layer may be effectively transferred, and lithium may be intercalated into the positive electrode at a desired level. The crack ratio may also be satisfied at an appropriate level. Accordingly, an effect, which may satisfy both lifetime improvement and capacity characteristics at the same time, may be achieved.

According to an embodiment of the present disclosure, the step of P3 of the method of preparing a positive electrode is preparing a positive electrode by removing the base film from the transfer stack after the rolling.

Referring to FIG. 4, in the step of P3, a positive electrode 100 may be prepared by removing the base film 310 from the transfer stack after the rolling performed in the step of P2. In a case in which the polymer layer 330 is disposed between the base film 310 and the lithium metal layer 320, the base film 310 may be more easily removed by the polymer layer 330.

Also, according to an embodiment of the present disclosure, the method of preparing a positive electrode may further include (P4) resting (leaving alone) the preliminary positive electrode for 1 minute to 600 minutes, specifically, 1 minute to 30 minutes. A step of P4 may be performed after the step of P2. Specifically, the step of P4 may be performed in at least one step of 'between the step of P2 and the step of P3' and 'immediately after the step of P3'. Since reaction heat, which has been generated by a reaction of the lithium metal layer and the preliminary positive electrode active material layer in the step of P2, may be effectively released by the step of P4, lithium is uniformly intercalated into the positive electrode, and thus, there is an effect of reducing the generation of the by-product.

In addition, since the prepared positive electrode has been previously described, a description thereof will be omitted.

**Secondary Battery**

A secondary battery according to the present disclosure includes a positive electrode, a negative electrode, and a separator disposed between the positive electrode and the negative electrode, wherein the positive electrode includes a positive electrode active material layer including a positive electrode active material, and a crack ratio of a surface portion of the positive electrode active material layer, which is derived from Equation 1 below, is in a range of 5.0% to 14.2%.

$$[\text{Equation 1}]$$

$$CR = (CA)/[(PA) + (CA)]$$

wherein, CR is a crack ratio (%), CA is a crack region, PA is a particle region, and the surface portion of the positive electrode active material layer refers to a region up to 20 $\mu$m in a depth direction from a layer surface.

Since the positive electrode has been previously described, a description thereof will be omitted.

According to an embodiment of the present disclosure, the negative electrode includes a negative electrode active material layer, the negative electrode active material layer may include a negative electrode active material, and a silicon-based negative electrode active material, a carbon-based negative electrode active material, or a combination thereof may be used as the negative electrode active material.

According to an embodiment of the present disclosure, the negative electrode active material may include a silicon-based negative electrode active material. The silicon-based negative electrode active material may include at least one of Si and $SiO_x$ (0<x<2).

The Si is silicon particles, wherein it may be silicon particles (particles formed of silicon), so-called Pure Silicon. The silicon particles may effectively improve the capacity of the negative electrode. The $SiO_x$ (0<x<2) may be in a form including Si and $SiO_2$, and the Si may constitute a phase. That is, x corresponds to a number ratio of oxygen (O) to Si included in the $SiO_x$ (0<x<2). In a case in which the silicon-based composite particle includes the $SiO_x$ (0<x<2), discharge capacity of the secondary battery may be improved.

According to an embodiment of the present disclosure, the silicon-based negative electrode active material has a problem of extremely poor life characteristics due to extreme volume changes during battery operation, but, in a case in which it is combined with the positive electrode according to the present disclosure, since excess lithium ions, not lithium in the positive electrode active material which determines capacity, are transferred to the silicon-based negative electrode active material when activated from the overlithiated positive electrode to react with the silicon-based negative electrode active material in advance, an irreversible phase is formed to reduce the available region, and, accordingly, the volume changes during battery operation are not severe so that the lifetime may be significantly improved and high capacity characteristics, which are inherent characteristics of the silicon-based negative electrode active material, may be sufficiently achieved.

According to an embodiment of the present disclosure, the negative electrode active material may further include a carbon-based negative electrode active material. The carbon-based negative active material may include at least one selected from the group consisting of artificial graphite, natural graphite, and graphitized meso-carbon microbeads.

According to an embodiment of the present disclosure, the negative electrode active material layer may further include a negative electrode binder. The negative electrode binder may include at least one selected from the group consisting of polyvinylidene fluoride-hexafluoropropylene copolymer (PVDF-co-HFP), polyvinylidene fluoride, polyacrylonitrile, polymethylmethacrylate, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, polyacrylate, an ethylene-propylene-diene monomer (EPDM), a sulfonated EPDM, a styrene-butadiene rubber (SBR), a fluorine rubber, poly acrylic acid, and a material having hydrogen thereof substituted with lithium (Li), sodium (Na), or calcium (Ca), or may include various copolymers thereof.

According to an embodiment of the present disclosure, the negative electrode active material layer may further include a negative electrode conductive agent. The negative electrode conductive agent is not particularly limited as long as it has conductivity without causing adverse chemical changes in the battery, and, for example, a conductive material such as: graphite such as natural graphite or artificial graphite; carbon black such as acetylene black, Ketjen black, channel black, furnace black, lamp black, and thermal black; conductive fibers such as carbon fibers or metal fibers; conductive tubes such as carbon nanotubes; fluorocarbon powder; metal powder such as aluminum powder, and nickel powder; conductive whiskers such as zinc oxide whiskers and potassium titanate whiskers; conductive metal oxide such as titanium oxide; or polyphenylene derivatives may be used.

According to an embodiment of the present disclosure, the secondary battery includes the separator. The separator separates the negative electrode and the positive electrode and provides a movement path of lithium ions, wherein any separator may be used as the separator without particular limitation as long as it is typically used in a secondary battery, and particularly, a separator having high moisture-retention ability for an electrolyte as well as low resistance to the transfer of electrolyte ions is preferable. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

According to an embodiment of the present disclosure, the secondary battery may further include an electrolyte. The electrolyte may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present disclosure is not limited thereto.

Specifically, the electrolyte may include a non-aqueous organic solvent and a metal salt. Examples of the non-aqueous organic solvent may be aprotic organic solvents, such as N-methyl-2-pyrrolidone, propylene carbonate, ethylene carbonate, butylene carbonate, dimethyl carbonate, diethyl carbonate, γ-butyrolactone, 1,2-dimethoxy ethane, tetrahydrofuran, 2-methyl tetrahydrofuran, dimethyl sulfoxide, 1,3-dioxolane, formamide, diemthylformamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate.

Particularly, ring-type carbonates among the carbonate-based organic solvents, such as ethylene carbonate and propylene carbonate, well dissociate a lithium salt in the electrolyte solution due to high dielectric constants as high-viscosity organic solvents, and thus, the ring-type carbonate may be preferably used. Since an electrolyte solution having high electrical conductivity may be prepared when the ring-type carbonate is mixed with low-viscosity, low-dielectric constant linear carbonate, such as dimethyl carbonate and diethyl carbonate, in an appropriate ratio, the ring-type carbonate may be more preferably used.

A lithium salt may be used as the metal salt, and the lithium salt is a material that is readily soluble in the non-aqueous electrolyte solution, wherein, for example, at least one selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$ may be used as an anion of the lithium salt.

At least one additive, for example, a haloalkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the above-described electrolyte components for the purpose of improving the life characteristics of the battery, suppressing a decrease in battery capacity, and improving discharge capacity of the battery.

As described above, since the secondary battery including the positive electrode according to the present disclosure stably exhibits excellent capacity and capacity retention, the secondary battery is suitable for portable devices, such as mobile phones, notebook computers, and digital cameras, and electric cars such as hybrid electric vehicles (HEVs).

Accordingly, according to another embodiment of the present disclosure, a battery module including the secondary battery as a unit cell and a battery pack including the battery module are provided.

The battery module and the battery pack may be used as a power source of at least one medium and large sized device selected from a power tool; an electric vehicle (EV); a hybrid electric vehicle; a plug-in hybrid electric vehicle (PHEV); or a power storage system.

## Examples

Hereinafter, preferred examples will be provided for better understanding of the present disclosure. It will be apparent to those skilled in the art that these examples are only provided to illustrate the present disclosure and various modifications and alterations are possible within the scope and technical spirit of the present disclosure. Such modifications and alterations fall within the scope of claims included herein.

## Electrode Preparation

### Example 1-1: Preparation of Positive Electrode

A transfer stack, which included a PET film (base film), a polymer layer (2.5 $\mu$m thick) disposed on the PET film and formed of PMMA, and a lithium metal layer (3.0 $\mu$m thick, loading amount of 0.62 mAh/cm$^2$) disposed on the polymer layer and formed of solid-phase lithium metal, was prepared.

$Li[Ni_{0.86}Co_{0.05}Mn_{0.05}Al_{0.01}]O_2$ was used as a positive electrode active material. The positive electrode active material was in a form of a secondary particle in which a plurality (10 or more) of $Li[Ni_{0.86}Co_{0.05}Mn_{0.08}Al_{0.01}]O_2$ primary particles were bonded to each other, and an average particle diameter $D_{50}$ of the secondary particles was 9 $\mu$m. A positive electrode, which included a preliminary positive electrode active material layer including the positive electrode active material, PVdF as a positive electrode binder, and carbon nanotubes, as a positive electrode conductive agent, at a weight ratio of 98:1:1 and an aluminum foil (thickness: 12 $\mu$m) as a positive electrode collector, was prepared. The preliminary positive electrode active material layer had a loading amount of 4.5 mAh/cm$^2$ and a thickness of 140 $\mu$m.

The transfer stack was disposed on the preliminary positive electrode active material layer to allow the lithium metal layer to be in contact with the preliminary positive electrode active material layer.

Thereafter, the positive electrode having the transfer stack disposed thereon was rolled by a roll press method and was then left standing for 24 hours. A pressure during the rolling was 20 kgf/cm. Through this, lithium ions of the lithium metal layer were intercalated into the preliminary positive electrode active material layer to form a positive electrode active material layer. Thereafter, the base film was removed and the rolled positive electrode was left standing for 10 minutes to prepare a positive electrode including the positive electrode collector, the positive electrode active material layer, and the polymer layer.

### Example 1-2: Preparation of Positive Electrode

A positive electrode was prepared in the same manner as in Example 1-1 except that the lithium metal layer had a thickness of 6.2 $\mu$m and a loading amount of 1.28 mAh/cm$^2$.

### Example 1-3: Preparation of Positive Electrode

A positive electrode was prepared in the same manner as in Example 1-2 except that the rolling pressure was 30 kgf/cm.

### Comparative Example 1-1: Preparation of Positive Electrode

A positive electrode was prepared in the same manner as in Example 1-1 except that the transfer stack was not used.

### Comparative Example 1-2: Preparation of Positive Electrode

A positive electrode was prepared in the same manner as in Example 1-1 except that the lithium metal layer had a thickness of 11.6 $\mu$m and a loading amount of 1.90 mAh/cm$^2$.

### Comparative Example 1-3: Preparation of Positive Electrode

A positive electrode was prepared in the same manner as in Example 1-2 except that the rolling pressure was 100 kgf/cm.

### Experimental Example 1: Physical Property Evaluation of the Positive Electrode

Crack ratios (%) were measured for the positive electrodes prepared in Examples 1-1 to 1-3 and Comparative Examples 1-1 to 1-3 by the following method.

After one day after completion of the preparation of each positive electrode, a cross section of the positive electrode was analyzed to set a region of 20 $\mu$m in a depth direction and 200 $\mu$m in an in-plane direction from a surface of the active material layer as a reference region, and a crack region and a particle region within this region were divided to obtain areas. The crack region was a portion where the particles were broken, and the particle region was a region where the particles were not broken, wherein a cross section of the electrode, which was cut by ion milling, was photographed with a scanning electron microscope (SEM) to obtain an image.

For the SEM cross-sectional image, the crack region and the particle region were quantified based on digital transformation, wherein a ratio of a region where a specific surface area was increased in the positive electrode was calculated by an additional process and quantified. Also, in order to improve accuracy, 50 or more reference regions were designated for the positive electrode cross section to obtain a crack ratio of each region, and an average value thereof was obtained.

[Table 1]

| | Lithium metal layer | | Crack ratio (%) |
|---|---|---|---|
| | Thickness ($\mu$m) | Loading amount (mAh/cm$^2$) | |
| Example 1-1 | 3.0 | 0.62 | 11.1 |
| Example 1-2 | 6.2 | 1.28 | 12.0 |
| Example 1-3 | 6.2 | 1.28 | 14.0 |
| Comparative Example 1-1 | 0 | 0 | 2.4 |
| Comparative Example 1-2 | 11.6 | 1.90 | 14.4 |
| Comparative Example 1-3 | 6.2 | 1.28 | 18.0 |

As shown in Table 1, with respect to Examples 1-1 to 1-3, it may be confirmed through the crack ratios that lithium was intercalated into the positive electrode through overlithiation, and Comparative Example 1-1 confirmed that the crack ratios are different between overlithiated and non-overlithiated cases. With respect to Comparative Example 1-2, the lithium layer was excessively thick during lithium transfer, and, with respect to Comparative Example 1-3, it may be confirmed that a degree of cracking of the positive electrode active material particles was excessive as a result of slightly increasing the rolling pressure.

**Preparation of Secondary Batteries**

**Example 2-1: Preparation of Secondary Battery**

Silicon particles having an average particle diameter $D_{50}$ of 5 $\mu$m was used as a negative electrode active material. A negative electrode, which included a preliminary negative electrode active material layer including the negative electrode active material, carboxymethylcellulose (CMC) as a negative electrode binder, and carbon nanotubes, as a negative electrode conductive agent, at a weight ratio of 80:10:10, was prepared. The preliminary negative electrode active material layer had a loading amount of 10 mAh/cm$^2$ and a thickness of 75 $\mu$m.

The positive electrode of Example 1-1, the negative electrode, and a porous polyethylene separator were assembled using a winding method, and a preliminary lithium ion secondary battery was prepared by injecting an electrolyte (ethylene carbonate (EC)/ethylmethyl carbonate (EMC) = 3/7 (volume ratio) and lithium hexafluorophosphate (LiPF$_6$ 1 mol) into the assembled battery.

The preliminary lithium ion secondary battery was charged at a C-rate of 0.1 C to 4.2 V and then discharged to 2.5 V to perform an activation process.

**Examples 2-2 and 2-3: Preparation of Secondary Batteries**

Lithium ion secondary batteries were prepared in the same manner as in Example 2-1 except that the positive electrodes of Examples 1-2 and 1-3 were respectively used instead of the positive electrode of Example 1-1.

**Comparative Examples 2-1 to 2-3: Preparation of Secondary Batteries**

Lithium ion secondary batteries were prepared in the same manner as in Example 2-1 except that the positive electrodes of Comparative Examples 1-1 to 1-3 were respectively used instead of the positive electrode of Example 1-1.

**Experimental Example 2: Initial Efficiency Evaluation**

Initial efficiencies were evaluated for the lithium secondary batteries of Examples 2-1 to 2-3 and Comparative Examples 2-1 to 2-3 under the following conditions.

Charging conditions: CC(constant current)/CV (constant voltage) (5 mV/0.005 C current cut-off) 4.2 V
Discharging conditions: CC(constant current) condition 2.5 V

[Table 2]

|  | Initial charge capacity (mAh) | Initial discharge capacity (mAh) | Initial efficiency (%) |
|---|---|---|---|
| Example 2-1 | 5.70 | 4.23 | 74.2 |
| Example 2-2 | 6.03 | 4.15 | 68.8 |
| Example 2-3 | 6.02 | 4.10 | 68.1 |
| Comparative Example 2-1 | 4.97 | 4.45 | 89.5 |
| Comparative Example 2-2 | 6.39 | 4.00 | 62.6 |
| Comparative Example 2-3 | 6.00 | 4.00 | 66.7 |

Referring to Table 2, with respect to Comparative Example 2-1, it may be understood that initial efficiency was excellent because the crack ratio of the positive electrode active material particles was low, but initial charge capacity was significantly low, and this may be a difference due to the occurrence or non-occurrence of overlithiation. Also, with respect to Comparative Example 2-2, overlithiation was performed, but its degree was excessive so that high initial charge capacity was exhibited and it may be confirmed that an effect may be rather reduced because an amount of lithium loss was large due to irreversible capacity that was not recovered as the discharge capacity. Comparative Example 2-3, similar to Comparative Example 2-2, also had high initial capacity due to overlithiation, but it may be understood that the lithium loss was large because the recovered capacity was small. In contrast, with respect to Examples 2-1 to 2-3, initial capacity was increased by supplementing lithium through overlithiation, and it may be confirmed that capacity may be used at a higher level than the comparative examples because the lithium loss was small.

**Experimental Example 3: Life Characteristics Evaluation of Secondary Battery**

Each of the secondary batteries of Examples 2-1 to 2-3 and Comparative Examples 2-1 to 2-3 was charged and discharged to evaluate life characteristics of the secondary battery using the following method, and the results thereof are presented in Table 3 below.

[0108]  * Life characteristics (capacity retention): Each secondary battery was charged and discharged in a first cycle and a second cycle at 0.1 C, and was charged and discharged from a third cycle to a 100$^{th}$ cycle at 0.5 C.

Charging conditions: CC(constant current)/CV (constant voltage) (5 mV/0.005 C current cut-off) 4.2 V
Discharging conditions: CC(constant current) condition 3.27 V

Each capacity retention was derived by the following calculation.

Capacity retention (%) = (N$^{th}$ discharge capacity/1$^{st}$ discharge capacity) × 100 (where N was 500 and 800)

[Table 3]

|  | Capacity retention (%) | |
| --- | --- | --- |
|  | 500 cycles | 800 cycles |
| Example 2-1 | 94.5 | 71.2 |
| Example 2-2 | 94.6 | 71.7 |
| Example 2-3 | 94.1 | 70.2 |
| Comparative Example 2-1 | 89.2 | 61.6 |
| Comparative Example 2-2 | 90.1 | 64.8 |
| Comparative Example 2-3 | 89.5 | 62.0 |

Referring to Table 3, it may be confirmed that Examples 2-1 to 2-3 had better life characteristics than Comparative Examples 2-1 to 2-3. With respect to Comparative Example 2-1, it exhibited excellent initial charge and discharge characteristics due to the low crack ratio of the positive electrode active material particles, but, since the available region of the negative electrode was not limited, the battery was degraded due to volume expansion of the negative electrode, and thus, it may be confirmed that life characteristics were poor, and, since Comparative Examples 2-2 and 2-3 had high crack ratios, it may be confirmed that lifetime was reduced due to a side reaction with an electrolyte solution. Also, with respect to the examples, capacity retention at 800 cycles was maintained at about 75% of capacity retention at 500 cycles, but, with respect to the comparative examples, it may be understood that not even a 70% level was maintained. Accordingly, it may be understood that lifetime of the comparative examples was shorter because the capacity retention itself was lower, but it may be understood that capacity degradation rates of the comparative examples were also faster.

[Description of Reference Numerals]

110: Positive Electrode Collector
120, 120': Preliminary Positive Electrode Active Material Layer
300: Transfer Stack
310: Base Film
320: Lithium Metal Layer
330: Polymer Layer
400: Positive Electrode Structure
R: Roll

**Claims**

1. A positive electrode comprising a positive electrode active material layer that includes a positive electrode active material,

   wherein a crack ratio of a surface portion of the positive electrode active material layer, which is derived from Equation 1, is in a range of 5.0% to 14.2%,

   $$[Equation\ 1]$$

   $$CR\ =\ (CA)/[(PA)\ +\ (CA)]$$

   wherein CR is a crack ratio (%), CA is a crack region, PA is a particle region, and the surface portion of the positive electrode active material layer refers to a region up to 20 $\mu$m in a depth direction from a layer surface.

2. The positive electrode of claim 1, wherein the positive electrode further comprises a lithium metal layer which is disposed on the positive electrode active material layer.

3. The positive electrode of claim 1, wherein the positive electrode further comprises a polymer layer which is disposed on the positive electrode active material layer.

4. The positive electrode of claim 1, wherein the crack ratio of the surface portion of the positive electrode active material layer is in a range of 6.0% to 14.1%.

5. The positive electrode of claim 1, wherein the crack ratio of the surface portion of the positive electrode active material layer is in a range of 7.0% to 14.0%.

6. The positive electrode of claim 1, wherein the positive electrode active material is at least one selected from the group consisting of a lithium cobalt oxide, a lithium nickel oxide, a lithium manganese oxide, a lithium nickel-based composite oxide, a lithium manganese-based composite oxide, and a lithium transition metal phosphate.

7. A method of preparing a positive electrode, the method comprising:

   (P1) disposing a transfer stack, which includes a base film and a lithium metal layer disposed on the base film, on a preliminary positive electrode active material layer to form a positive electrode structure such that the lithium metal layer and the preliminary positive electrode active material layer are in contact with each other;
   (P2) rolling the positive electrode structure; and
   (P3) preparing a positive electrode by removing the base film from the transfer stack after the rolling,
   wherein the positive electrode comprises a positive electrode active material layer including a positive electrode active material, and
   a crack ratio of a surface portion of the positive electrode active material layer, which is derived from Equation 1, is in a range of 5.0% to 14.2%:

   $$[Equation\ 1]$$

   $$CR\ =\ (CA)/[(PA)\ +\ (CA)]$$

   wherein CR is a crack ratio (%), CA is a crack region, PA is a particle region, and the surface portion of the positive electrode active material layer refers to a region up to 20 $\mu$m in a depth direction from a layer surface.

8. The method of claim 7, wherein rolling the positive electrode structure in the step of P2 is performed by a roll-to-roll method.

9. The method of claim 7, wherein the lithium metal layer has a thickness of 1 $\mu$m to 10 $\mu$m.

10. The method of claim 7, wherein a loading amount of the lithium metal layer is 4% to 40% of a loading amount of the preliminary positive electrode active material layer.

**11.** The method of claim 7, wherein the transfer stack further comprises a polymer layer, and the polymer layer is disposed between the base film and the lithium metal layer.

**12.** The method of claim 7, wherein the method further comprises (P4) resting the preliminary positive electrode for 1 minute to 600 minutes after the step of P2.

**13.** The method of claim 7, wherein a pressure applied to the positive electrode structure during the rolling in the step of P2 is in a range of 10 kgf/cm to 90 kgf/cm.

**14.** A lithium secondary battery comprising a positive electrode, a negative electrode, and a separator between the positive electrode and the negative electrode,

wherein the positive electrode comprises a positive electrode active material layer including a positive electrode active material, and
a crack ratio of a surface portion of the positive electrode active material layer, which is derived from Equation 1, is in a range of 5.0% to 14.2%:

$$[\text{Equation 1}]$$

$$CR = (CA)/[(PA) + (CA)]$$

wherein, CR is a crack ratio (%), CA is a crack region, PA is a particle region, and the surface portion of the positive electrode active material layer refers to a region up to 20 $\mu$m in a depth direction from a layer surface.

**15.** The lithium secondary battery of claim 14, wherein the negative electrode comprises a negative electrode active material layer, and the negative electrode active material layer comprises a negative electrode active material, wherein the negative electrode active material comprises a silicon-based negative electrode active material.

[FIG.1]

[FIG.2]

[FIG.3]

[FIG.4]

<div style="text-align:center">

**INTERNATIONAL SEARCH REPORT**

</div>

| International application No. |
|---|
| **PCT/KR2023/011962** |

**A.    CLASSIFICATION OF SUBJECT MATTER**

**H01M 4/36**(2006.01)i; **H01M 4/525**(2010.01)i; **H01M 4/505**(2010.01)i; **H01M 4/04**(2006.01)i; **H01M 4/62**(2006.01)i; **H01M 10/052**(2010.01)i; **H01M 4/38**(2006.01)i; **H01M 4/131**(2010.01)i; **H01M 4/1391**(2010.01)i; **H01M 4/02**(2006.01)i

According to International Patent Classification (IPC) or to both national classification and IPC

**B.    FIELDS SEARCHED**

Minimum documentation searched (classification system followed by classification symbols)

H01M 4/36(2006.01); H01M 10/052(2010.01); H01M 4/131(2010.01); H01M 4/1395(2010.01); H01M 4/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차전지(lithium secondary battery), 양극(cathode), 압연(press), 전사(transfer), 전리튬화(pre-lithiation), 리튬 금속(lithium metal)

**C.    DOCUMENTS CONSIDERED TO BE RELEVANT**

| Category* | Citation of document, with indication, where appropriate, of the relevant passages | Relevant to claim No. |
|---|---|---|
| A | LIU, Z. et al. A scalable cathode chemical prelithiation strategy for advanced silicon-based lithium ion full batteries. ACS Applied Materials & Interfaces. 2021, vol. 13, pp. 11985-11994. <br> See abstract; and page 11986, 2.3. Electrochemical measurements. | 1-15 |
| A | JP 2021-528808 A (TIANMULAKE EXCELLENT ANODE MATERIAL CO., LTD. et al.) 21 October 2021 (2021-10-21) <br> See entire document. | 1-15 |
| A | KR 10-2018-0104174 A (CAMX POWER LLC) 19 September 2018 (2018-09-19) <br> See entire document. | 1-15 |
| A | WU, Y. et al. A pre-lithiation method for sulfur cathode used for future lithium metal free full battery. Journal of Power Sources. 2017, vol. 342, pp. 537-545. <br> See entire document. | 1-15 |
| A | KR 10-2021-0029459 A (LG CHEM, LTD.) 16 March 2021 (2021-03-16) <br> See entire document. | 1-15 |

☐ Further documents are listed in the continuation of Box C.       ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **10 November 2023** | **10 November 2023** |

| Name and mailing address of the ISA/KR | Authorized officer |
|---|---|
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/011962**

| Patent document cited in search report | | | Publication date (day/month/year) | Patent family member(s) | | | Publication date (day/month/year) |
|---|---|---|---|---|---|---|---|
| JP | 2021-528808 | A | 21 October 2021 | CN | 108565396 | A | 21 September 2018 |
| | | | | KR | 10-2021-0003239 | A | 11 January 2021 |
| | | | | KR | 10-2577440 | B1 | 12 September 2023 |
| | | | | US | 2021-0230441 | A1 | 29 July 2021 |
| | | | | WO | 2019-228003 | A1 | 05 December 2019 |
| KR | 10-2018-0104174 | A | 19 September 2018 | CA | 3013355 | A1 | 17 August 2017 |
| | | | | CN | 108780884 | A | 09 November 2018 |
| | | | | CN | 108780884 | B | 29 March 2022 |
| | | | | EP | 3414787 | A1 | 19 December 2018 |
| | | | | EP | 3414787 | B1 | 18 January 2023 |
| | | | | JP | 2019-505086 | A | 21 February 2019 |
| | | | | JP | 2021-106165 | A | 26 July 2021 |
| | | | | JP | 6985297 | B2 | 22 December 2021 |
| | | | | JP | 7369157 | B2 | 25 October 2023 |
| | | | | PL | 3414787 | T3 | 11 April 2023 |
| | | | | US | 11394023 | B2 | 19 July 2022 |
| | | | | US | 2019-0036118 | A1 | 31 January 2019 |
| | | | | US | 2022-0328820 | A1 | 13 October 2022 |
| | | | | WO | 2017-139477 | A1 | 17 August 2017 |
| KR | 10-2021-0029459 | A | 16 March 2021 | CN | 113826237 | A | 21 December 2021 |
| | | | | EP | 3961764 | A1 | 02 March 2022 |
| | | | | US | 2022-0223847 | A1 | 14 July 2022 |
| | | | | WO | 2021-045431 | A1 | 11 March 2021 |

Form PCT/ISA/210 (patent family annex) (July 2022)

**EP 4 517 873 A1**

**REFERENCES CITED IN THE DESCRIPTION**

**Patent documents cited in the description**

- KR 1020220101636
- KR 1020220183744